# EUROPEAN PATENT APPLICATION

(11) **EP 0 777 134 A1**
(43) Date of publication of application: **04.06.1997**
(21) Application number: 96927957.9
(22) Date of filing: 02.08.1996
(51) Int. Cl.: G01S 17/02

(54) **DEVICE FOR OBSERVING OBJECTS**

(30) Priority: 04.06.1996 RU 96110435
(71) Applicant: YALESTOWN CORPORATION N.V., Curaçao, Netherlands Antilles (AN)
(72) Inventor: MOROZOV, Alexei Vitalievich, Moscow, 123181 (RU); SOUKHOROSSOV, Sergei Jurievich, Kaliningrad, 141070 (RU)
(74) Representative: BOVARD AG - Patentanwälte
(86) International application number: RU9600207
(87) International publication number: WO9635963

(57) **Abstract**

Utilisation of the invention: optics instrument engineering, in particular, optical detection and ranging instruments.

Substance of the invention: a device comprises a pulsed light source 1 with a transmitting optics, a control unit 2, an optical image detector 3 with a receiving objective, including a blankable electron-optical image converter 5 and a television camera 7, and also an additional optical image detector 4, comprising a brightness amplifier 6 and a television camera 8. The peculiar mode of television image forming enables to obtain at the TV-1 output a specific image-plan of observable objects, comprising an information about ranging to the each specific object.

A brightness equalising of objects, remote at different distances, and obtaining of an usual television image at the TV-2 input are provided.

## Description

### FIELD OF THE INVENTION

The present invention relates to the optics instrument engineering and has particular reference to the instruments for an observation of the objects at a reduced illumination.

### BACKGROUND OF THE INVENTION

A method of an object observation at a reduced illumination is known, in according to which an object is illuminated by a pulsed light source and the light, reflected from the objects, is received by an optical image detector, synchronising an operation of the controlled shutter thereof with a light pulse emission. A device, realising this method, comprises a pulsed light source with a transmitting optics and an optical image detector with the controlled pulse shutter (see EP *N*º 0363735). Adjusting a delay between the light emission moment and a device shutter opening moment the images of the objects, located within a zone of the most interest can be obtained.

A disadvantage of the known method and device is that when one light source and one TV camera being used it is possible to obtain an information about objects, lying within a substantial narrow sight zone only.

To broaden the sight zone it is possible to use several simultaneously operating light sources ( or several pulses) with a different delay to form one frame or several cameras (each camera operates at its own range) with the following summation of videosignals that results in the substantial increasing of the apparatus expenditures (e.g., see EP *N*º 0468175). Besides that it is impossible to get an information about the actual mutual location of objects according to an observed range thereof.

The use of three operating at the different ranges cameras with the corresponding colour coding of the pictures obtained by these cameras to determine a distance to the objects (see EP *N*º 0531722) enables to estimate the range only approximately, particularly when said device being operated in a turbid medium (fog, smoke, dust, etc.). For instance, when a fog stripe in the foreground (red colour) and the object in the background (blue colour) being presented the resulting image will be of purple colour, that will be hamper the estimation of a distance to the object. The ranging with using such instruments will be impossible for people, misapprehend the colours.

The most close analogue to the present invention is a device disclosed in UK Patent *N*º 1052178. This object observation device comprises a pulsed light source with a transmitting optics, an electron-optic image converter and a control unit, coupled thereto. Said device overcomes the above-described disadvantages, since there is a possibility to obtain equally with the usual object image a specific image, that brings an information about the distance to each specific object. Nevertheless said information about the range will be true only for such objects, which are lying on the horizontal plane, aligned with a device optical axis. Besides that a brightness of the objects, located at various distances from said device, will differ and at the presence of a great number of the objects at a short distance from it the images thereof will mask the images of the remote objects. The same effect of remote object masking will occur if such instruments operate in a turbid medium (fog, snowfall, smoke, etc.)

### SUMMARY OF THE INVENTION

The present invention solves a problem of the said closest analogue disadvantage elimination and provides both usual image and specific image-plan of the space within a device field of vision, comprising an information about a distance to the objects with equalising of the brightness of objects located at various distances.

Due to the fact that in the conditions of the reduced visibility there is a possibility of obtaining the equibright images of the located at various distances objects, the present invention is appropriate for using on the vehicles and at navigation, where there is a need to have images of all the objects, lying in front of the vehicle at the same time, but not only of the objects, located at a certain distance. If the image-plan is available it is possible to efficiently estimate the mutual location of the objects and to determine also a distance to the object of interest, that is particularly important in a pilotage in narrow waters.

The above-mentioned problems are solved by using an object observation device, comprising a pulsed light source with a transmitting optics, an electron-optic image converter with a receiving optics and a control unit coupled thereto. Said device is provided with a television camera, an input of which is conjugated to an electron-optical image converter output. Said control unit is connected with the television camera and is designed to provide a possibility of generating of varying during one frame delay of the electron-optical image converter turning-on relatively to a turning on moment of said pulsed light source, which is synchronised with the television signal lines at an output of the television camera, which is designed to provide a possibility of recording of the object image, obtained after each pulsed light source turning-on, in the output television signal corresponding line. A television camera photosensitive element is provided in the form of a photodetective strip or a photodetective matrix. To obtain the images of the equibright objects the proposed device is designed in such a manner to provide the possibility of varying of the light source power and/or the electron-optical image converter gain factor. The proposed device is provided with an additional television camera for generating the television signal, corresponding to the usual image of all objects, illuminated with the light source. Said additional television camera is connected with the first television camera in such a manner to provide a possibility of synchronising of operation thereof. Beside that an additional electron-optical image converter is provided, an output of which is conjugated to the additional television camera input. Said control unit includes an univibrator, an input of which is connected with said television camera and is designed to provide the possibility of applying horizontal line sync pulses thereto. The univibrator first output is connected with the first input of said delay unit, the output of which is connected in series with a pulse generator and an amplifier first input. The output of said amplifier is connected with the electron-optical image converter. The second input of said delay unit is connected with the first output of a saw-tooth voltage generator, the second input of which is connected with the amplifier second input, and the saw-tooth voltage generator second input is connected with said television camera and is designed to provide the possibility of the vertical frame sync pulses applying thereto. The additional electron-optical image converter input may be connected with the first electron-optical image converter input.

### BRIEF DESCRIPTION OF DRAWINGS

Fig.1 is a block-diagram of the proposed device.

Fig.2 explains the principle of plotting of the image-plan and usual image, formed with the additional detector.

Fig.3 is a block-diagram of a control unit.

### PREFERRED EMBODIMENT OF THE INVENTION

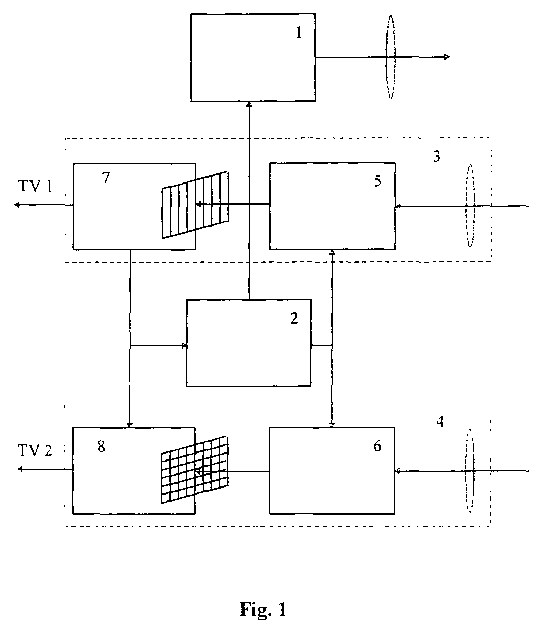

A device for observation of objects (Fig.1) comprises a pulsed light source 1 with a transmitting (image-forming) optics an input of which is connected with a first output of a synchronising unit 2, an image detector 3 and an additional image detector 4, coupled to the synchronising unit second output, each of said detectors being provided with the blankable electron-optical image converters 5,6, provided with receiving objectives and with a television CCD-cameras 7,8 (CCD- charge-coupled device). Said device comprises also an univibrator 9, a voltage controlled delay unit 10, a saw-tooth voltage generator 10, a pulse generator 12 and an amplifier 13. Said object observation device is operating in a following way.

Said pulsed light source provides a pulsed illumination of the objects of observation (not shown in Fig.1), the light reflected from the objects is received with said image detector 3, which forms a television image of observable objects, and with said additional image detector 4, which forms the usual television image of observable objects.

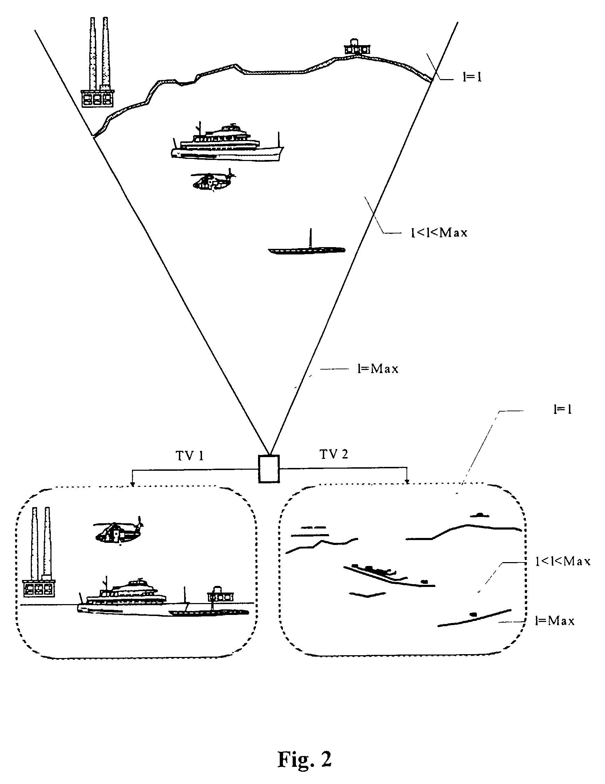

The television CCD-camera 7 synchronises said control unit, which sets one cycle of the image forming for a time of one line of the CCD-camera videosignal. During the image forming cycle said control unit 2 triggers the pulsed light source 1 and then triggers the blankable electronic-optical image converters 5,6.The delay of the converter triggering pulses relatively to the light source triggering pulses is the highest possible for the first image forming cycle in the frame (1=1) and corresponds to the time of the light propagation from a locator to the most remote objects and back(Fig.2). This delay is reduced by a magnitude corresponding to the ranging step for each next image forming cycle. The ranging step may be both constant and variable magnitude. For the last image-forming cycle (1=Max) the delay corresponds to the time of the light passing from said device to the nearest object and back. The blankable electron-optical image converters 5,6 form successively, a cycle by a cycle the images of the observable space layers, which are at the corresponding current range delay. It is expediently to select the layer thickness to the current ranging step.

The image, formed by the converter 5 during each image-forming cycle, is accumulated in the accumulation section of the CCD-matrix of the TV-camera 7, is summed over columns and is recorded in the accumulation section line, corresponding to the current-image-forming cycle. As a result the line, will be found in the end of the frame in the accumulation section, each of said lines contains the information about objects, located at the corresponding ranges. During the next frame this television image-plan is converted into a television signal, entering to the TV-1 output and new image is recorded in the place thereof.

The images, formed by the converter 6, are summed during the frame duration in the accumulation section of the CCD-matrix of the television camera 8 in such a manner that in the end of the frame the usual television image of all objects located within the observation space will be formed. Said image is transferred by the usual way in the accumulation section, then is converted into the television signal and enters to the TV-2 output.

The gain factors of the converters 5,6 or/and the light pulse power are set for each image forming cycle in such a manner that the image brightnesses provided at the outputs of the converters 5,6 from the different distances are equalised.

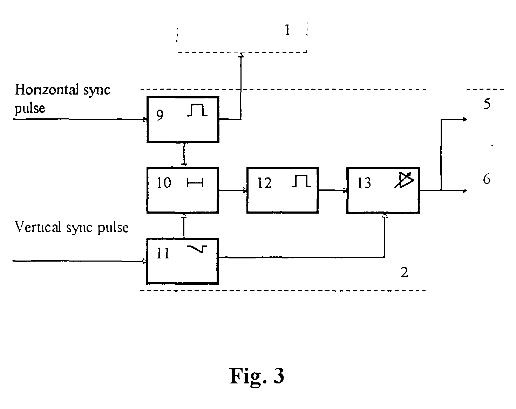

The TV CCD-cameras 7,8 are operating in the synchronous mode by the lines and the frames, that enables to facilitate the further combined processing of obtained images. The horizontal line sync pulses entering from the television camera 7 to the control unit 2 trigger the image forming cycle, namely trigger the univibrator (fig.3), which generates the light source trigging pulses. The light pulse, radiated by the light source is propagated to the observation object side, is reflected therefrom and is returned back to the image detector. Simultaneously with the light source triggering said univibrator 9 triggers the voltage controlled delay unit 10, a delay value of which is proportional to the control voltage, entering from the saw-tooth voltage generator 11. The generator 11 is synchronised by the vertical frame sync pulses, entering from the TV-camera 7, and generates the voltage, which is maximum in the beginning of the frame and decreases linearly to the end thereof.

The pulses at the delay unit 10 output are thus delayed at the maximum time in the beginning of the frame, which equals to the doubled time of the light passing to the most remote objects. The maximum range is determined as the distance to the objects of observation, characterised in that a light, reflected therefrom, may be still detected by the image detectors. Further this delay decreases linearly during the frame duration up to the minimum value in the end of the frame.

The pulses from the delay unit 10 output enter to the detector trigging pulse generator 12, said pulses enter in turn to the amplifier 13, the amplification of which is controlled by the saw-tooth voltage from the generator 11. The formed thus control pulses enter to the blankable electron-optical image converters 5,6, which may be made on the basis of the electron-optical image converters (EOC) with the microchannel plates (MCP). The above-named signals are applied to the MCP of the EOC, which form on a screen thereof the amplificated image of the objects, the reflected light therefrom enters to the photocathode thereof in the moment of the control pulse action. Since the gain of the MCP is proportional to the square of the voltage, so the linear law of the control pulse amplitude varying will compensate the inverse square dependence of the observation object irradiance on the range and the images thereof will be equibright, that resolves the problem of the image brightness equalising of objects, located within the device field of vision at the various distances therefrom.

The durations of the light pulses tapped from the light source 1 and the control pulses applied to the MCP of the EOC are selected in such a manner that the depth of an imageable layer during one pulse action would be equal to the ranging step between the pulses. (The depth of the imageable layer equals to the half of the path, which the light passed for a time equal to the pulse duration, defined as a convolution of the light pulse and the control pulse).

The image formed by the EOC 5 is transferred to the receiving surface of the CCD-matrix of the television camera 7. In the capacity of the CCD-camera 7 may be used the television CCD-camera with the line-frame transfer, e.g., on the basis of the CCD matrix 1200CM7. During the image forming cycle the charge image is stored in the matrix accumulation section, the potentials of all phase electrodes of the accumulation section being set low. In this case the detectable image is summed over the matrix columns. In the end of the image forming cycle the charge image of the accumulation section columns is transferred in the corresponding cells of the accumulation section upper line, in this case the potentials of the first accumulation section and then of the second accumulation section are set low, and the potentials of all phases of the accumulation section are increased. Further the potential of the first phase of the accumulation section is increased up the maximum value thereof, and the potential of the accumulation section phases is increased to transfer the charges remaining in the accumulation section columns in the substrate. Such re-recording mechanism is necessary to limit the sum signal from large-sized objects in the vertical direction. In the end of the re-recording process the formed line is transferred under third phase of the accumulation section, where it is stored up to the next re-recording process, during which it shifts to the next line of the accumulation section, etc. In the end of the frame the accumulation section will be filled with the image lines, each of which corresponds to its range, the line, formed in the beginning of the frame and corresponding to the maximum range, being placed in the very bottom of the accumulation section, the nearest to the output register. During the next frame the lines, formed during the preceding frame, are transferred as the new frames being entered in the output register to convert into the television signal by the usual way.

The images formed by the EOC 6 during each image forming cycle are transferred to the receiving surface of the CCD-matrix of the television camera 8 and are accumulated in the accumulation section thereof during the frame duration in such a way that in the end of the frame will be formed a sum image of all objects, located within observable space. This image is transferred to the accumulation section and is converted into the usual television signal, which enters to the TV-2 output. In the capacity of the television CCD-camera 8 may be used any type of the television CCD-camera. As a result the television signal at the output of the television CCD-camera 7 (the output of the TV-1) comprises the image-plan, the first lines of which (the upper part of the television screen) contains the information about the most remote objects, and the last lines (the lower part of said television screen) contains the information about the nearby objects, each line being corresponded to the certain range thereof.

### THE INDUSTRIAL APPLICATION

As appears from the above the object observation device is realised with an application of a usual technology standard for the presented field of industry. The usage of the device is advisable on the vehicles, in particular under the pilotage in narrow waters, where the application of the usual navigational radars isn't efficient (a great error at the short distances).

The availability of the combined image-plan and usual image enables not only ranging to the specific object of the interest, but to identify thereof correctly, that improves the navigation safety.

## Claims

1. A device for observation of objects comprising a pulsed light source with a transmitting optics, an electron-optical image converter with the receiving optics and a control unit, coupled thereto, characterised in that said device is provided with a television camera, an input of which is conjugated to an electron-optical image converter output, said control unit is connected with the television camera and is designed to provide a possibility of generating of varying during one frame delay of the electron-optical image converter turning-on relatively to a turning on moment of said pulsed light source, which is synchronised with the television signal lines at an output of the television camera, which is designed to provide a possibility of recording of the object image, obtained after each pulsed light source turning-on, in the output television signal corresponding line.

2. A device as claimed in Claim 1 characterised in that a television camera photosensitive element is made in the form a photosensitive strip or photosensitive matrix.

3. A device as claimed in Claims 1 or 2 characterised in that in order to obtain equibright object images said device is designed to provide a possibility of light source power and/or an electron-optical image converter gain factor varying.

4. A device claimed in any Claims 1-3 characterised in that an additional television camera is provided for generating of the television signal, corresponding to a usual image of objects, illuminated by a light source.

5. A device claimed in Claim 4 characterised in that an additional television camera is coupled to the first television camera and is designed to provide a possibility of synchronising of the operation thereof.

6. A device as claimed in Claims 4 or 5 characterised in that an additional electron-optical image converter is provided an output of said converter is conjugated to the additional television camera input.

7. A device as claimed in any Claims 1-6 characterised in that the control unit includes an univibrator, the input of which is connected with the television camera and is designed to provide a possibility of applying thereto the horizontal line sync pulses, the univibrator first input is connected with a delay unit first input, an output of which is connected in series with a pulse generator and the first input of an amplifier, the output of which is connected with the electron-optical image converter, the delay unit second input is connected with a saw-tooth voltage generator first output, the second output of which is connected with the amplifier second input, the saw-tooth voltage generator input with the television camera and is designed to provide a possibility of applying the vertical frame sync pulses thereto.

8. A device as claimed in Claim 7 characterised in that an additional electronic-optical image converter input is connected with the first electronic-optical image converter input.
